# EUROPÄISCHE PATENTSCHRIFT

(11) **EP 3 500 462 B1**
(45) Veröffentlichungstag und Bekanntmachung des Hinweises auf die Patenterteilung: **27.04.2022**
(21) Anmeldenummer: 17731808.6
(22) Anmeldetag: 20.06.2017
(51) Int. Cl.: B60T 8/36

(54) **VORSTEUEREINHEIT, STELLSYSTEM UND VERFAHREN ZU DESSEN HERSTELLUNG**
PILOT UNIT, ACTUATOR SYSTEM AND METHOD FOR PRODUCING SAID SYSTEM
UNITÉ DE COMMANDE PILOTE, SYSTÈME DE RÉGLAGE ET PROCÉDÉ DE FABRICATION ASSOCIÉ

(30) Priorität: 16.08.2016 DE 102016009944
(43) Veröffentlichungstag der Anmeldung: 26.06.2019
(73) Patentinhaber: ZF CV Systems Europe BV, 1170 Brussels (BE)
(72) Erfinder: DIDWISZUS, Lars, 31 157 Sarstedt (DE); RUNGE, Karsten, 31832 Springe (DE); SCHAPPLER, Hartmut, 30455 Hannover (DE); TEICHMANN, Andreas, 30916 Isernhagen (DE); TORHOFF, Ingo, 30890 Barsinghausen (DE)
(74) Vertreter: Koschnitzki, Thomas
(86) Internationale Anmeldenummer: PCT/EP2017/000715
(87) Internationale Veröffentlichungsnummer: WO 2018/033231

(56) Entgegenhaltungen:
- EP-A2- 1 128 106
- WO-A1-95/02531
- WO-A1-2008/034525
- DE-A1- 2 424 492
- US-A- 5 458 150
- US-A1- 2004 239 178

## Beschreibung

Die Erfindung betrifft ein Stellsystem mit einer Vorsteuereinheit, sowie ein Verfahren zu dessen Herstellung.

Das Stellsystem ist hierbei als zweikanaliger elektropneumatischer oder elektrohydraulischer Achsmodulator für ein Bremssystem eines Fahrzeugs ausgebildet.

Achsmodulatoren in Bremssystemen dienen zur Aussteuerung eines Bremsdrucks an die angeschlossenen Bremskreise einer Achse. Achsmodulatoren von EBS (elektronisches Brems-System)-Systemen steuern im Allgemeinen einen Systemdruck eines Druckluft-Vorratsspeichers über Sperrventile - im Allgemeinen ein Einlass- und ein Auslassventil - direkt zu einem Relaisventil, das über eine Bremsleitung eine Radbremse mit Druckluft versorgt. Aus Sicherheitsgründen ist eine pneumatische Rückfallebene vorgesehen; hierzu können z. B. Redundanzventile des Achsmodulators eine Bremsdruck- Steuerleitung aufnehmen, die einen vom Fahrer über ein Bremspedal und Bremsventil eingegebenen analogen Bremsdruck zuführt. Das stromlos offene Redundanzventil leitet somit bei ausgeschalteter oder defekter elektronischer Steuereinheit den analogen Bremsdruck zu einer pneumatischen Steuerleitung, an die das Relaisventil des Bremskreises angeschlossen ist.

Bei eingeschalteter oder funktionsfähiger Steuereinheit wird das Redundanzventil gesperrt, und ein Vorratsdruck oder Systemdruck eines angeschlossenen Druckluftspeichers wird z. B. getaktet über das Einlassventil zu dem Relaisventil durchgesteuert; somit kann z. B. über einen mit dem Bremspedal verbundenen elektrischen Bremswertgeber ein Bremspedalweg sensiert und nachfolgend direkt an der Achse eine Druckersteuerung aus dem Vorratsdruck vorgenommen werden. Entsprechend ist ein Auslassventil zum Entlüften der pneumatischen Steuerleitung, die zu dem Relaisventil führt, vorgesehen.

Das Relaisventil stellt somit einen pneumatischen Verbraucher dar, dessen pneumatischer Steuereingang über mehrere elektropneumatische Vorsteuer-Ventile bzw. Pilot-Ventile angesteuert wird.

Somit sind bei einem einkreisigen Achsmodulator drei elektrisch angesteuerte Vorsteuer-Ventile, im Allgemeinen 2/2-Sperrventile, für jeden Bremskreis aufzunehmen und an das Relaisventil anzuschließen. Eine derartige Ausbildung einer Vorsteuereinheit mit drei pneumatischen Vorsteuer-Ventilen, deren elektrische Anschlüsse zu einer gemeinsamen Steuereinheit (ECU) hinweisen und deren pneumatische Anschlüsse auf einer Seite zu dem Relaisventil weisen, erfordert im Allgemeinen eine aufwändige Konstruktion. Hierbei werden die Vorsteuer-Ventile im Allgemeinen in Bohrungen gesetzt, die vertikal in einem Luftverteilergehäuse verlaufen, so dass die Vorsteuer-Ventile in ihrer axialen Richtung aus dem Gehäuse herausragen und an ihrem anderen abgewandten Ende durch eine zusätzliche Kappe verschlossen werden, die insbesondere als Ankerendanschlag ihrer Anker dient. Zum Anschluss der Ventile sind in dem Luftverteilergehäuse weitere, nicht senkrecht verlaufende Bohrungen erforderlich, z. B. eine laterale Bohrung und im Allgemeinen schräg verlaufende Bohrungen. Diese Bohrungen sind aufwändig entweder nachträglich oder bei z. B. einem Kunststoff-Spritzgussteil durch schräge Schieber im Spritzwerkzeug auszubilden. Die so ausgebildete Konstruktion erfordert zudem ein entsprechendes Einbauvolumen. Für weitere Funktionen der Ventile, z. B. auch bei 3/2-Ventilen, sind ergänzend weitere pneumatische Kanäle in dem Luftverteilergehäuse auszubilden.

Die zu dem Vorsteuer-Raum bzw. Steueranschluss des pneumatischen Verbrauchers führenden Kanäle bilden ein Luftvolumen, das zur Ansteuerung jeweils zu belüften und nachfolgend wiederum zu entlüften ist. Dies verlängert z. B. bei einem Relaisventil eine entsprechende Ansprechzeit oder Ansteuerzeit und erhöht den Luftverbrauch.

Die WO 95/02531 A1 beschreibt eine Ventilausbildung mit einem Test für ein elektronisch gesteuertes Bremssystem. Die Ventilausbildung weist einen Modulator auf, der durch eine elektronische Steuereinrichtung angesteuert wird.

In WO2008/034525A1 ist eine Ventilsteuereinheit für einen Druckmodulator eines Nutzfahrzeugs gezeigt, die in einem Ventilsteuergehäuse Magnetventile mit Magnetspulen und in die Magnetspulen eingesetzte Ventilinnenteile aufweist. Die Ventilinnenteile sind hierbei in Ventilbohrungen eingesetzt, die in dem Ventilsteuergehäuse ausgebildet sind. Ergänzend sind pneumatische Drucksensoren vorgesehen.

Der Erfindung liegt die Aufgabe zugrunde, ein elektropneumatisches Stellsystem und ein Verfahren zu dessen Herstellung zu schaffen, die eine Ausbildung mit geringem Aufwand ermöglichen.

Diese Aufgabe wird durch ein Stellsystem nach Anspruch 1 und ein Verfahren zu dessen Herstellung gelöst. Die Unteransprüche beschreiben bevorzugte Weiterbildungen. Hierbei ist das elektropneumatische Stellsystem als ein zweikanaliger elektropneumatischer Achsmodulator für ein Bremssystem ausgebildet.

Erfindungsgemäß werden die mindestens zwei bzw. mehreren Vorsteuerventile (Pilotventile), insbesondere elektropneumatischen Vorsteuerventile, derartig nebeneinander positioniert, dass ihre an den Eingangsanschluss bzw. Vorsteuer-Raum des jeweiligen Verbrauchers anzuschließenden Anschlüsse zu einer gemeinsamen Unterseite hin ragen. Die Vorsteuerventile sind somit in einer zu ihrer Axialrichtung senkrechten seitlichen (lateralen) Richtung nebeneinander, vorzugsweise parallel nebeneinander, angeordnet, wobei ihre zum gemeinsamen Vorsteuer-Raum hin ragenden Anschlüsse in der dritten Richtung, d. h. vertikal zu ihrer Unterseite hin, weisen bzw. offen ausgebildet sind.

Die Vorsteuereinheit ermöglicht somit ein Aufsetzen in vertikaler Richtung auf die Verbraucher, so dass die an den Vorsteuer-Raum des jeweiligen Verbrauchers anzuschließenden Anschlüsse, z. B. der Ausgangsanschluss eines Redundanzventils und eines Einlassventils sowie der Eingangsanschluss eines Auslassventils, gemeinsam nach unten ragen.

Eine gemeinsame Kanalführung dieser nach unten ragenden Anschlüsse ist nicht mehr erforderlich, da sie direkt in den Anschlussraum, insbesondere Vorsteuer-Raum des jeweiligen Verbrauchers der mindestens zwei Verbraucher münden können.

Somit ist insbesondere eine Ausbildung von Bohrungen oder Kanälen in einem unter den Ventilen angebrachten Luftverteilergehäuse nicht mehr erforderlich. Der Fluid-Anschluss, insbesondere pneumatische Anschluss an den jeweiligen gemeinsamen Verbraucher, erfolgt in der vertikalen Richtung (d.h. nach unten), die weiteren Fluidführungen, z. B. Luftführungen, hingegen vorzugsweise zunächst in der zur vertikalen Richtung senkrechten Ebene, d.h. in der Axialrichtung der Ventile und ggf. einer Querrichtung, durch geeignete Fluidkanäle in einem angesetzten Fluidführungselement (Luftführungselement).

Das Fluidführungselement kann formschlüssig und/oder mit Einrastmitteln an den Ventilen befestigt ist, z. B. an einem Schenkel des gemeinsamen Jochbügels, zur Ausbildung der einteiligen Vorsteuereinheit Somit wird insbesondere auch eine liegende Anordnung der mehreren Vorsteuer-Ventile, d. h. eine horizontale Anordnung auf dem jeweils gemeinsam anzuschließenden fluidbetätigten Verbraucher ermöglicht. Die Vorsteuereinheit mit den Vorsteuer-Ventilen und einem Fluidführungselement kann liegend als im Wesentlichen horizontale bzw. flache Einheit nachfolgend in der vertikalen Richtung direkt mit ihren nach unten weisenden Anschlüssen auf den Vorsteuer-Raum des jeweiligen Verbrauchers der mindestens zwei Verbraucher gesetzt werden.

Hierdurch entfallen auch weitere pneumatische Kanäle oder Zuführungen zu dem jeweiligen Verbraucher. Insbesondere kann jeweils ein großdimensionierter Verbraucher mit einem Vorsteuer-Raum, der sich bis unter die Fluid-Anschlüsse der Vorsteuer-Ventile erstreckt, vorgesehen sein; somit gehen die Fluid- Anschlüsse der Vorsteuer-Ventile direkt in den Vorsteuer-Raum über, d.h. sie gehen direkt in den jeweiligen Verbraucher, so dass eine zusätzliche Fluid-Steuerleitung, d.h. insbesondere pneumatische Steuerleitung, zwischen den Vorsteuerventilen und dem jeweiligen Verbraucher, die im Allgemeinen in den Schaltbildern vorgesehen ist, bei der Hardware-Ausbildung faktisch entfallen kann.

Hierdurch wird insbesondere auch bei einem elektropneumatischen System ein geringes pneumatisches Volumen der pneumatischen Steuerleitung von den mehreren Vorsteuer-Ventilen zu dem Vorsteuer-Raum erreicht. Die pneumatische Ansteuerung erfolgt direkt und unmittelbar, ohne unnötige Verzögerung. Der Druckluftverbrauch wird gering gehalten, da nur ein geringes Volumen zu belüften und zu entlüften ist. Auch ermöglicht eine großdimensionierte Ausbildung des jeweiligen Verbrauchers, z. B. eines Relaisventils, die sich in der horizontalen Ebene über die Anschlüsse der Ventile erstreckt, eine effektive Umsetzung des Steuerdrucks in eine Kraft.

Die Vorsteuereinheit kann z. B. über eine Formdichtung direkt auf den Vorsteuerraum des jeweiligen Verbrauchers gesetzt werden. Somit entfallen auch aufwändige pneumatische Dichtmittel wie O-Ringe usw.; die Formdichtung kann aus einem flexiblen Material passgenau für sämtliche pneumatischen Anschlüsse ausgebildet werden und vertikal zwischen die Vorsteuereinheit und den jeweiligen pneumatischen Verbraucher gesetzt werden.

Das Fluidführungselement bzw. Fluidverteilerelement kann in der Axialrichtung an die mehreren Ventile angesetzt werden und dient insbesondere zum Fluid- Anschluss der nicht zu dem jeweiligen Verbraucher hin weisenden Anschlüsse. Bei einem Achsmodulator können somit die Eingangsanschlüsse des Einlassventils und des Redundanzventils, sowie der Ausgangsanschluss des Ausgangsventils über das gemeinsame Fluidführungselement ausgebildet werden. Diese Anschlüsse können über das Fluidführungselement und nachfolgend z. B. auch in der vertikalen Richtung neben dem z. B. jeweiligen pneumatischen Verbraucher nach unten geleitet werden. Somit kann eine gemeinsame Dichtung für sowohl die Anschlüsse an den jeweiligen z. B. pneumatischen Verbraucher als auch die weiteren Anschlüsse ausgebildet werden.

Das pneumatische Stellsystem mit der Vorsteuereinheit und den mindestens zwei pneumatischen Verbrauchern kann somit kleinbauend und kompakt ausgebildet werden. Es sind keine von einem Vorsteuergehäuse weg ragenden Ventile, mit einem zusätzlichen Endabschluss durch eine Anschlusskappe, mehr erforderlich. Der so eingesparte Bauraum kann z. B. zur größeren lateralen bzw. horizontalen Dimensionierung des jeweiligen Verbrauchers bzw. seines Steuerkolbens, eingesetzt werden.

Weiterhin ist eine kostengünstige Ausbildung der Vorsteuereinheit, insbesondere als Modulsystem möglich. Die Vorsteuer-Ventile können insbesondere mit parallelen Ventilachsen nebeneinander an einem gemeinsamen Jochbügel aufgenommen werden, wobei sie z. B. jeweils zwischen die beiden Schenkel des gemeinsamen Jochbügels nebeneinander gesetzt werden. Somit ist lediglich ein gemeinsamer Jochbügel erforderlich, der z. B. als gebogene Platte aus ferritischem Stahl ausgebildet sein kann und die Leitung des Magnetflusses jedes Ventils außerhalb des Spulen-Innenraums ermöglicht. Magnetische Querflüsse zwischen den Vorsteuerventilen können z. B. durch Löcher in dem Jochbügel zwischen den Vorsteuerventilen unterdrückt werden.

Hierdurch ist eine kostengünstige, modulweise Ausbildung aus standardisierten Ausgangsmaterialien für unterschiedliche Ventilsysteme oder Verbraucher möglich, bei der ein Jochbügel passend (in der Querrichtung) abgelängt wird und die erforderliche Anzahl der mehreren Ventile zwischen die Jochbügel gesetzt wird. Die Vorsteuerventile können für unterschiedliche Funktionen grundsätzlich mit gleichen oder weitgehend gleichen Teilen ausgebildet sein. So können 2/2-Sperrventile standardisiert ausgebildet werden, d.h. mit gleichen in den Spulen-Innenraum einzusetzenden Ventilteilen, z. B. Anker, Kern (Ventilrohr) und Ankerfeder, auch um z. B. die wahlweise Ausbildung als im Grundzustand offenes oder auch sperrendes Sperrventil zu ermöglichen. Die Montage bzw. der Zusammenbau erfolgt durch direktes Einsetzen in den gemeinsamen Jochbügel.

Die Befestigung der Ventile bzw. des gemeinsamen Jochbügels an dem Fluidführungselement kann z. B. als Einrastung oder selbsttätige Verklemmung zumindest während der Montage erfolgen, z. B. durch seitliche Rasthaken oder ähnliche, selbstrastenden Mechanismen. Somit kann das Luftführungselement direkt in Axialrichtung aufgesetzt und eingerastet werden.

Die modulweise Ausbildung der Ventile in einem gemeinsamen Jochbügel kann weiter vereinfacht werden. So kann z. B. auch ein Verpolschutz oder Einbauschutz, z. B. eine Poka-Yoke-Ausbildung der unterschiedlichen Ventile vorgenommen werden, um einen Fehleinbau zu vermeiden. Somit kann ein standardisierter Jochbügel bzw. Jochbügel geeigneter Länge zum Einsetzen geeigneter Ventile, standardisiert bereit gehalten werden.

Die elektronische Steuereinheit kann mit ihrem Schaltungsträger, z. B. einer Leiterplatte, wiederum direkt vertikal auf die Vorsteuereinheit aufgesetzt werden, z. B. auf nach oben abstehende Kontaktstifte.

Ein besonderer Vorteil ergibt sich auch bei dem erfindungsgemäßen Mehrkreissystem, d.h. einem mindestens zweikanaligen pneumatischen Achsmodulator, da zwei Vorsteuereinheiten für die beiden Bremskreise bzw. Bremskanäle zusammen an ein gemeinsames mittleres Luftführungselement angesetzt werden können. Somit weist dieses Modul die mehreren, sich in seitliche Richtung aneinander anschließende Vorsteuer-Ventile jedes Kreises bzw. Kanals auf, an das sich in Axialrichtung das mittlere Luftführungselement zwischen den beiden Ansteuermodulen anschließt. So wird eine gemeinsame Vorsteuereinheit für zwei Kanäle mit nur einem Luftführungselement als eine Baueinheit ausgebildet, die nachfolgend senkrecht auf den beiden Relaisventilen bzw. einer die beiden Relaisventile aufnehmenden Baueinheit aufgesetzt und z. B. durch Schrauben, mit dazwischenliegenden Formdichtungen, aufgeschraubt wird.

Weiterhin wird eine vollständige Vormontage und Prüfung der Vorsteuereinheit auf pneumatische und/oder elektrische Eigenschaften ermöglicht, bei der die Handhabung bzw. das Handling vereinfacht ist: Es wird zunächst eine Vorsteuereinheit für mindestens zwei Kreise gemeinsam ausgebildet werden, indem modulweise die Ventile an dem gemeinsamen mittleren Luftführungselement angesetzt werden, und die so ausgebildete Vorsteuereinheit zunächst elektrisch und/oder pneumatisch getestet oder überprüft wird, und nachfolgend die getestete Vorsteuereinheit direkt über z. B. die Formdichtung auf die pneumatischen Verbraucher aufgesetzt und befestigt werden. Hierdurch wird die Effektivität der Fertigung der Geräte gesteigert.

Ergänzend können auch weitere Drucksensoren integriert werden, z. B. zur Sensierung eines Vorratsdrucks oder des analogen Steuerdrucks, wobei die Drucksensoren insbesondere an der elektronischen Steuereinheit bzw. deren Leiterplatte aufgenommen, kontaktiert und an eine geeignete pneumatische Kammer des Luftführungselementes angeschlossen werden. So können zusätzliche Drucksensoren einfach angeschlossen werden, ohne z. B. eine Ausbildung zusätzlicher Bohrungen in einem Gehäuse.

Die Erfindung wird im Folgenden anhand der beiliegenden Zeichnungen an einer Ausführungsform näher erläutert. Es zeigen:
- Fig. 1: ein elektropneumatisches Schaltschema eines zweikanaligen Achsmodulators für ein Bremssystem eines Fahrzeugs;
- Fig. 2: einen Schnitt durch ein Vorsteuerventil der elektropneumatischen Vorsteuereinheit ohne Anker und Kern,
- Fig. 3 bis 5 und Fig. 7: stellen technische Erläuterungen an einem einkanaligen Stellsystem dar, das technischen Hintergrund darstellt und erfindungsgemäß nicht direkt mit erfasst wird. Fig. 6 zeigt eine zweikanalige Ausbildung, die Gegenstand der Erfndung ist; somit zeigen:

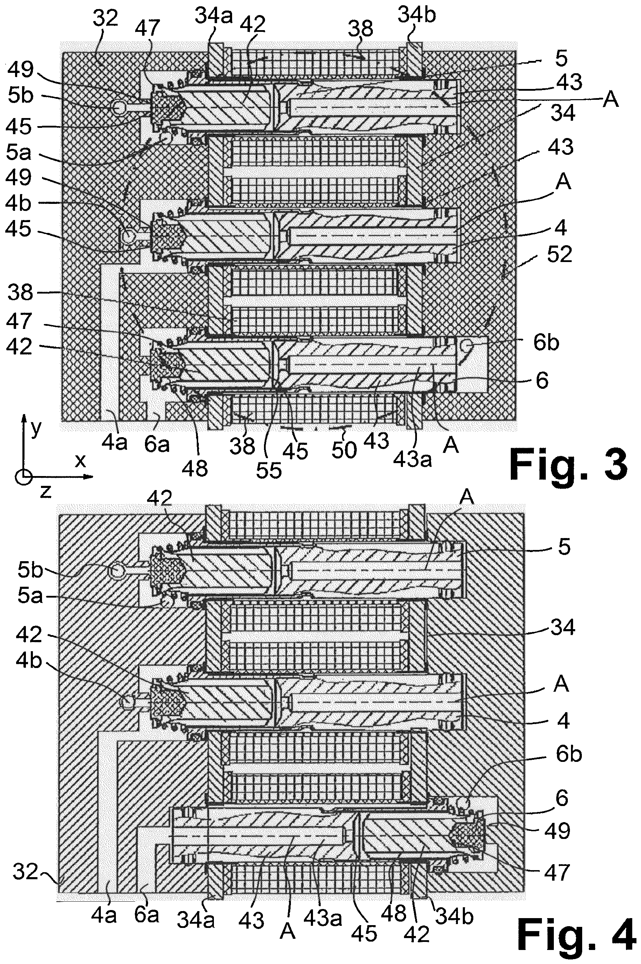

- Fig. 3: einen schematisierten Schnitt durch eine horizontale Ebene der Steuereinheit gemäß einer einkanaligen Ausbildung;
- Fig. 4eine der Fig. 3: entsprechende Darstellung bei geänderter Ventilanordnung;

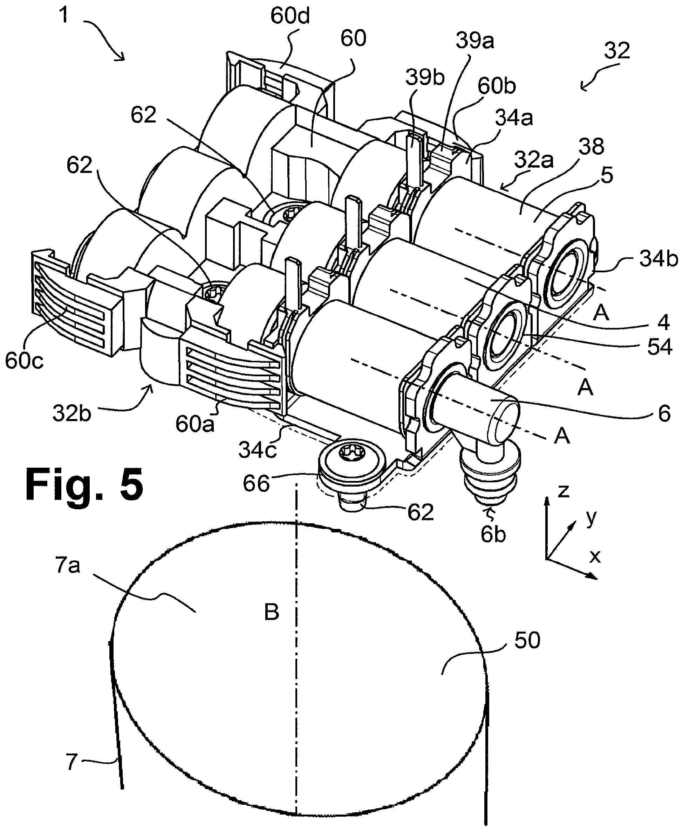

- Fig. 5: eine perspektivische Ansicht der elektropneumatischen Vorsteuereinheit gemäß Fig. 3;

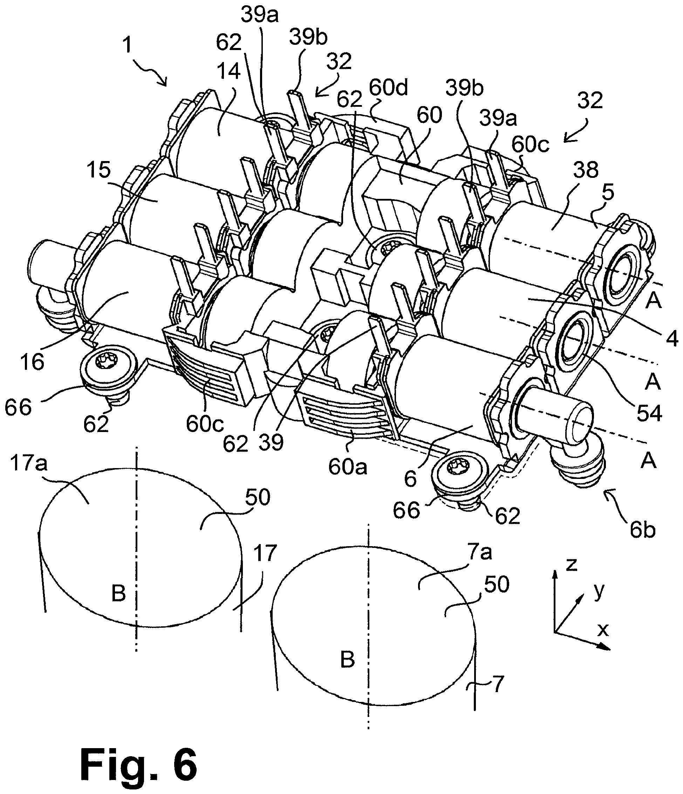

- Fig. 6: eine erfindungsgemäße zweikanalige Ausbildung in einer der Fig. 5 entsprechenden Ansicht bei Anschluss von zwei Vorsteuereinheiten für zwei Bremskanäle, zur Ausbildung eines Achsmodulators (ohne ECU); und

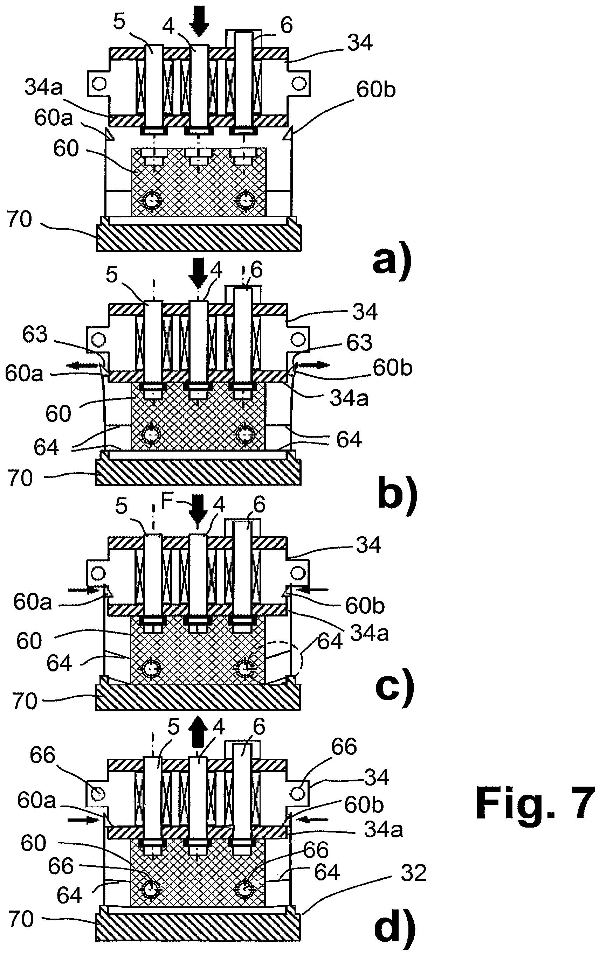

- Fig. 7: die Teilschritte a) bis d) der Montage der Vorsteuereinheit, beispielhaft an der Ausbildung der Fig. 5

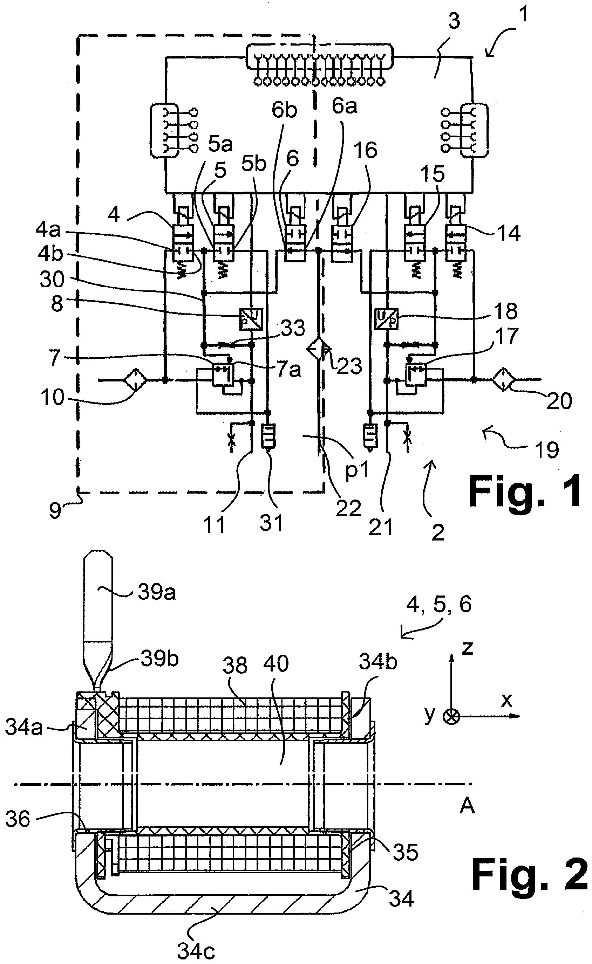

Fig. 1 zeigt einen zweikanaligen elektropneumatischen Achsmodulator 1 für ein hier nur angedeutetes Bremssystem, insbesondere elektronisches Bremssystem (EBS) 2 eines Nutzfahrzeugs 2. Der Achsmodulator 1 weist eine elektronische Steuereinheit (ECU) 3, erste elektromagnetische Vorsteuer-Ventile (Pilotventile) 4, 5, 6, ein erstes Relaisventil 7 und einen ersten Drucksensor 8 für einen ersten Bremskreis 9, z. B. einer Hinterachse eines Nutzfahrzeugs, und entsprechend zweite Vorsteuer-Ventile 14, 15, 16, ein zweites Relaisventil 17 und einen zweiten Drucksensor 18 eines zweiten Bremskreises 19 der Hinterachse des Nutzfahrzeugs auf. Somit kann der zweikanalige elektropneumatische Achsmodulator 1 die beiden Bremskreise 9 und 19 ansteuern.

Bei ausgeschalteter oder ausgefallener elektronischer Steuereinheit 3 ermöglicht der Achsmodulator 1 einen analogen Bremsbetrieb, bei dem ein analoger Steuer-Bremsdruck p4, der von dem Fahrer durch ein Bremspedal und ein an das Bremspedal angeschlossenes Bremsventil über eine pneumatische Bremsdruck- Steuerleitung 22 zu einem Eingangsanschluss 23 eingegeben wird, sowohl an eine erste Bremsleitung 11 des ersten Bremskreises 9 als auch an eine zweite Bremsleitung 21 des zweiten Bremskreises 19 auszugeben.

Nachfolgend wird der Achsmodulator 1 weiter mit Bezug zum ersten Bremskreis 9 beschrieben. In dem ersten Bremskreis 9 ist ein erstes Redundanzventil 6 als elektropneumatisches 2/2- Vorsteuer-Sperrventil, und entsprechend im zweiten Bremskreis 19 ein vorzugsweise identisch ausgebildetes zweites Redundanzventil 16 vorgesehen. Die beiden Redundanzventile 6, 16 sind im nichtbestromten Grundzustand offen; somit ist der pneumatische Eingangsanschluss 6a des ersten Redundanzventils 6 mit dessen Ausgangsanschluss 6b verbunden, der wiederum über eine pneumatische Steuerleitung 30 an den Steuereingang (Eingangsanschluss) 7a bzw. Vorsteuer-Raum 50 des Relaisventil 7 angeschlossen ist. Das Relaisventil 7 empfängt somit den über den Ausgangsanschluss 6b des Redundanzventils 6 ausgegebenen analogen Brems-Steuerdruck p1, um von seinem ersten Vorratsdruck-Anschluss 10 von einem Druckluftvorrat aufgenommenen Vorratsdruck (Systemdruck) p0 in Abhängigkeit des Brems-Steuerdrucks p1 auf die erste Bremsleitung 11 auszugeben. Hierdurch wird eine pneumatische Rückfallebene bei Ausfall der elektronischen Steuereinheit 3 gewährleistet.

Bei eingeschalteter fehlerfreier elektronischer Steuereinheit 3 werden die Redundanzventile 6 und 16 beim Bremsen bestromt, d. h. somit gesperrt, und die weiteren elektromagnetischen Vorsteuer-Ventile 4, 5 sowie entsprechend 14 und 15 angesteuert. Hierbei wird entsprechend in dem ersten Bremskreis 9 Systemdruck p0 von dem Vorratsanschluss 10 über das getaktete Einlassventil 4 auf die pneumatische Steuerleitung 30 und somit zu dem Steuereingang 7a des Relaisventils 7 gegeben. Die elektronische Steuereinheit 3 misst hierbei über den Drucksensor 8 den ausgegebenen Steuerdruck p2 und taktet das Einlassventil 4 derartig, dass der gewünschte Druckwert in der pneumatischen Steuerleitung 30 eingestellt wird, der dann von dem Relaisventil 7 volumenmäßig verstärkt an die erste Bremsleitung 11 ausgegeben wird. Entsprechend dient das erste Auslassventil 5 dazu, die pneumatische Steuerleitung 30 zu entlüften, indem das erste Auslassventil 5 die pneumatische Steuereinrichtung 30 an einen Entlüftungsanschluss 31 legt. Das Auslassventil 5 kann hierbei getaktet oder nicht getaktet ausgesteuert werden. In Fig. 1 ist im ersten Bremskreis 9 eine Rückkopplungsleitung 33 mit Drossel gezeigt, die grundsätzlich auch entfallen kann.

Somit dienen im ersten Bremskreis 9 die drei elektromagnetischen Vorsteuer-Ventile 4, 5, 6 zur pneumatischen Vorsteuerung bzw. Ansteuerung des pneumatischen Steuereingangs 7a des Relaisventils 7 und sind mit ihren Ausgangsanschlüssen 4b, 5b, 6b über die pneumatische Steuerleitung 30 an den pneumatischen Steuereingang 7a des Relaisventils 7 angeschlossen.

Die ersten Vorsteuer-Ventile 4, 5, 6 zusammen mit angeschlossenen Leitungen bilden eine erste elektropneumatische Vorsteuereinheit 32 (Ansteuermodul), an die die elektronische Steuereinheit 3 elektrisch angeschlossen wird und weiterhin der Steuereingang 7a des Relaisventils 7 pneumatisch angeschlossen wird. Weiterhin weist die Vorsteuereinheit 32 die oben genannten pneumatischen Anschlüsse auf, d.h. den Vorratsdruck-Anschluss 10 für den Vorratsdruck p0, den Eingangsanschluss 23 für die pneumatische Bremsdruck- Steuerleitung 22 und einen Entlüftungsanschluss 31.

Die elektropneumatische Vorsteuereinheit 32 wird als Einheit auf das Relaisventil 7 aufgesetzt, wobei bei der Hardware-Realisierung die Anschlüsse 4b, 5a und 6b zu einer Unterseite 32b der Vorsteuereinheit 32 hin ragen und direkt an den Steuereingang 7a des Relaisventils 7 angeschlossen werden, insbesondere sogar in einen Vorsteuerraum bzw. Kolbenraum des Relaisventils 7, so die pneumatische Steuerleitung 30 nicht separat zu realisieren ist und bei der Hardware-Ausbildung faktisch entfallen kann bzw. als Teil des Vorsteuerraums des Relaisventils 7 anzusehen ist.

Die Hardware-Ausbildung der drei ersten Vorsteuer-Ventile 4, 5, 6 ist insbesondere aus Figur 2 und bei den zur Erläuterung dienenden, nicht direkt von der Erfindung erfassten Figuren 3 bis 5 ersichtlich; hierbei teilen sich die Vorsteuer-Ventile 4, 5, 6 vorteilhafterweise einen gemeinsamen Jochbügel 34, der C-förmig bzw. U-förmig, d. h. halb offen mit zwei Schenkeln 34a und 34b und einem mittleren Bügelbereich 34c ausgebildet ist, wobei die Vorsteuer-Ventile 4, 5, 6 mit ihren Enden jeweils in den beiden Schenkeln 34a und 34b aufgenommen sind. Der Jochbügel 34 ist aus weichmagnetischen bzw. magnetisch leitenden Material, z. B. ferritischem Stahl, ausgebildet und kann entsprechend durch Biegen einer Eisenplatte bzw. Stahlplatte hergestellt werden. In den Schenkeln 34a und 34b sind jeweils für jedes Vorsteuer-Ventil 4, 5, 6 zwei Jochbuchsen 35, 36 aus weichmagnetischem Material, z. B. ferritischem Stahl, eingesetzt.

In den 34a und 34b sind zwischen den Vorsteuer-Ventilen 4, 5, 6 jeweils Unterbrechungen 44 oder Löcher ausgebildet, um eine magnetischen Querfluss zwischen den Vorsteuer-Ventilen 4, 5, 6 zu unterdrücken.

Die Ausbildung der Vorsteuer-Ventile 4, 5, 6 ist im Wesentlichen gleich und kann somit gemeinsam beschrieben werden. Sie weisen jeweils eine Ventilachse A auf, deren Axialrichtung nachfolgend als x-Richtung beschrieben wird; die Vorsteuer-Ventile 4, 5, 6 liegen in einer Querrichtung y nebeneinander und werden in der vertikalen z-Richtung mit der Steuereinheit 3 und dem Relaisventil 7 verbunden. Somit liegt eine Symmetrieachse B des Relaisventils 7 in z-Richtung und somit senkrecht zu den Ventilachsen A

Die Spule 38 wird über ihre elektrischen Kontakte 39a, 39b (Steckkontakte) angesteuert und umgibt den Ventil-Innenraum 40 mit der Ventilachse A. In dem Ventilinnenraum 40 sind in Axialrichtung x verstellbare Anker 42 sowie ein sich in Axialrichtung x anschließender Kern 43 (Ventilrohr) aufgenommen, die jeweils wiederum aus weichmagnetischem Material, z. B. ferritischem Stahl, gefertigt sind. Somit wird bei Bestromung der Spule 38 ein Magnetfluss erzeugt, der in Richtung der Ventilachse A zunächst durch den Anker 42 und den Kern 43 zu den Schenkeln 34a und 34b des Jochbügels 34, und weiter über den mittleren Bügelbereich 34c des Jochbügels 34 geschlossen wird.

Das Einlassventil 4 und das Auslassventil 5 sind selbstsperrende 2/2-Magnetventile (Solenoid-Ventile), wohingegen das Redundanzventil 6 ein selbstleitendes (im Grundzustand offenes) 2/2-Sperrventil ist. Dementsprechend ist gemäß Fig. 3 und 4 die Ausbildung bzw. das Anschlußschema der drei Vorsteuer-Ventile 4, 5, 6 unterschiedlich:
In Fig. 3 ist der Außenumfang 52 des unterhalb liegenden Steuerkolbens 51 des Relaisventils 7 als gestrichelter Kreis angedeutet. Die Vorsteuerkammer 50 ist zur Ausbildung eines kleinen zu verstellenden Gasvolumens entsprechend mit der Formgebung des Außenumfangs 52, zwischen dem Steuerkolben 51 und der Vorsteuereinheit 32 vorgesehen.

Gemäß der Darstellung der Fig. 3 sind die drei Vorsteuer-Ventile 4, 5, 6 gleich ausgerichtet, d. h. ihr jeweiliger Anker 42 liegt zu einer gemeinsamen linken Anschlussseite hin, wobei die drei Vorsteuer-Ventile 4, 5, 6 in seitlicher y-Richtung nebeneinander zwischen den Schenkeln 34a des Jochbügels 34 aufgenommen sind. Der Eingangsanschluss 6a des Redundanzventils 6 liegt bei dieser technischen Ausbildung an dem Anker 42 an, so dass Druckluft durch Schlitze (Ankerschlitze) 48 des Ankers 42 in Axialrichtung x durch den Anker 42 zu dem Ventilsitz 45 gelangen kann, der zwischen dem Anker 42 und dem in Axialrichtung x folgenden Kern (Ventilrohr) 43 ausgebildet ist. Der Kern 43 ist mit einer Durchgangsbohrung 43a ausgebildet, die zu dem Ausganganschluss 6b des Redundanzventils 6 führt. Der Anker 42 wird hierbei durch seine Ankerfeder 47 gegen den Anschlag 49 gedrückt. Im gezeigten unbestromten Grundzustand des Redundanzventils 6 gelangt Druckluft somit von dem Eingangsanschluss 6a durch die Schlitze 48, den offenen Ventilsitz 45, die Durchgangsbohrung 43a zu dem Ausgangsanschluss 6b.

Bei Bestromung der Spule 38 des Redundanzventils 6 wird der Anker 42 gegen die Wirkung seiner Ankerfeder 47 in Axialrichtung x verstellt und gelangt gegen den Ventilsitz 45, so dass der pneumatische Durchgang zwischen den Schlitzen 48 und der Durchgangsbohrung 43a des Kerns 43 hierdurch verschlossen wird. Somit sperrt das Redundanzventil 6.

Das Einlassventil 4 ist gemäß der gezeigten Ausbildung ebenfalls mit einer Durchgangsbohrung 43a ausgebildet, die jedoch grundsätzlich nicht erforderlich ist, da es als selbstsperrendes 2/2-Sperrventil mit pneumatischen Anschlüssen von einer Seite her ausgebildet ist. Sein Eingangsanschluss 4a liegt somit an dem Versorgungsanschluss 10 mit Vorratsdruck p0 an. Hierbei kann gemäß der gezeigten Ausbildung der Anker 42 an seinem Anschlag 49 den Ventilsitz 45 zu seinem Ausgangsanschluss 4b bilden. Der Ausgangsanschluss 4b kann direkt in vertikaler Richtung bzw. -Z-Richtung, d. h. in Fig. 3 in die Zeichenebene hinein, vertikal nach unten zu dem Vorsteuerraum 50 des Relaisventils 7 geführt sein.

Das Auslassventil 5 ist wiederum als selbstsperrendes 2/2-Sperrventil entsprechend dem Einlassventil 4 ausgebildet, wobei sein Eingangsanschluss 5a wiederum entsprechend den Anschlüssen 6b und 4b direkt vertikal zu dem Vorsteuerraum 50 des Relaisventils 7 führt. Sein Ausgangsanschluss 5b liegt außerhalb des Außenumfangs 52 des Ventilkolbens 51 und kann somit ebenfalls vertikal nach unten weggeführt werden zu einer Ausgangsleitung zur Entlüftung 31. Im gezeigten Grundzustand sperren somit die beiden Vorsteuer-Ventile 4, 5, indem ihr Anker 42 jeweils am Anschlag 49 anliegt und hierdurch einen geschlossenen Ventilsitz 45 bildet. Die Anker 42 der beiden Vorsteuer-Ventile 4, 5 können ohne Ankerschlitze 48 ausgebildet sein, auch kann der Kern 43 ohne Bohrung 43a ausgebildet sein. Die in Fig. 3 gezeigte Ausbildung ermöglicht jedoch den Einsatz gleich ausgebildeter und somit standardisierter Vorsteuer-Ventile 4, 5, 6, die mit gleichem Aufbau und gleicher geometrischer Ausbildung jeweils in Ausnehmungen 54 der Schenkel 34a, 34b des Jochbügels 34 aufgenommen sind.

Fig. 4 zeigt eine Ausbildung, bei der das Redundanzventil 6 in invertierter geometrischer Anordnung vorgesehen ist. Druckluft gelangt von dem Eingangsanschluss 6a des Redundanzventil 6 durch den Kern 43 bzw. eine Durchgangsbohrung 43a seines Kerns 43 zu dem Ventilsitz 45, der zwischen dem Kern 43 und dem verstellbaren Anker 42 ausgebildet ist, und entlang seitlicher Schlitze 48 des Kerns 42 zu dem Ausgangsanschluss 6b. Der Anker 42 ist somit zwischen dem Ventilsitz 45 und einem Ankeranschlag 49 längsverstellbar und über seine Ankerfeder 47 zu dem Ankeranschlag 49 hin federvorgespannt. Bei Bestromung der Spule 38 wird somit der Anker 42 gegen die Wirkung seiner Ankerfeder 47 zu dem Ventilsitz 45 hin verstellt und verschließt diesen. Der Ausgangsanschluss 6b des Redundanzventils 6 verläuft auch bei dieser Ausbildung nach unten weg, dh in negativer vertikaler Z-Richtung, direkt zu dem Steuereingang 7a des Relaisventils 7, d. h. mündet direkt in einen Vorsteuer-Raum 50, der in dem Relaisventil 7 ausgebildet ist und direkt auf einen Ventilkolben 51 (bzw. eine Ventil-Membran) des Relaisventils 7 wirkt.

Grundsätzlich lassen sich somit in dem Jochbügel 34 elektromagnetische 2/2-Sperrventile mit beliebiger Funktion, sowohl selbstsperrend als auch selbstleitend, anordnen; weiterhin können auch andere Solenoid-Ventile, z. B. 3/2-Ventile, aufgenommen werden.

Der Anker 42 kann an beiden axialen Enden oder einem axialen Ende mit einer Dichtung 55, z. B. Gummi, ausgebildet sein, je nachdem, ob z. B. der Anschlag nur am jeweiligen Ventilsitz 45, oder auch der andere Anschlag zu dämpfen ist.

In Fig. 3 bis 5 ist eine Ausbildung mit drei Vorsteuer-Ventilen 4, 5, 6 vorgesehen, die der technischen Erläuterung dient. Erfindungsgemäß ist ein mindestens zweikanaliger Bremsmodulator vorgesehen. So können Ausbildungen mit z. B. zwei Vorsteuer-Ventilen, d. h. einem Jochbügel 34 mit einer Erstreckung seiner Schenkel 34a, 34b in y-Richtung zur Aufnahme lediglich zweier Ventile, oder auch mit mehr als drei Ventilen vorgesehen sein. Hierbei können ggf. Verwechslungen oder falsche Einbauanordnungen durch Verpolschutz bzw. Verwechslungsschutz im Endbereich der Kerne 43 (Ventilrohre) vorgesehen sein, d. h. eine Poka-Yoke-Kontur für den Einbau.

Somit wird ein Modulsystem ermöglicht, das sehr kostengünstig ausbildbar ist, indem ein gemeinsamer Jochbügel 34 aus einem Halbzeug passend gekürzt und eine beliebige Anzahl mehrerer elektromagnetischer Ventile bzw. Vorsteuer-Ventile 4, 5, 6 in y-Richtung nebeneinander aufgenommen wird.

Gemäß Fig. 5 ist an der linken Anschlussseite in Axialrichtung x ein Luftführungselement 60, vorzugsweise ein Kunststoff-Spritzgussteil, angesetzt. Die Montage kann durch selbsttätige Verriegelung oder Einrasten, z. B. durch die beiden gezeigten Schnapphaken 60a und 60b (Einrasthaken) erfolgen, die z. B. den Schenkel 34a des Jochbügels 34 ergreifen und eine dichtende Anlage, ggf. mit einer ergänzenden Dichtung, ermöglichen. Hierbei müssen die Einrasthaken nicht unbedingt die entstehenden pneumatischen Druckkräfte abfangen können, da diese nach der kompletten Montage des Gerätes durch die Verschraubung der Vorsteuerkomponenten mit dem Relaisventil aufgenommen werden.

Erfindungsgemäß ist gemäß Fig. 6 direkt der mindestens zweikanalige Achsmodulator 1 ausgebildet, indem zwei elektropneumatische Vorsteuereinheiten 32 für die beiden Bremskreise 9 und 19 zu beiden Seiten an das mittlere Luftführungselement 60 angesetzt und entsprechend über die Schnapphaken 60a, 60b, 60c, 60d einrasten. Somit wird eine Vorsteuereinheit 32 (bzw. ein Ansteuermodul) gebildet, die in vertikaler Richtung bzw. -Z-Richtung auf die beiden Relaisventile 7, 17 aufgesetzt und über z. B. sechs Schrauben 62 an der Relaisventil-Ausbildung verschraubt wird.

Bei einer derartigen Ausbildung ist eine komplette Vormontage und Prüfung dieser Vorsteuereinheit bzw. der elektromagnetischen Vorsteuereinheit 32 möglich, d. h. sowohl pneumatisch als auch elektrisch. Dieses Modul kann nachfolgend direkt auf die Relaisventile 7, 17 aufmontiert werden.

Auch die in Fig. 1 gezeigten Drucksensoren 8 und 18 können direkt an das Luftführungselement 60 angeschlossen werden, z. B. durch Ausbildung entsprechender Kanäle oder Gänge in dem Luftführungselement 60. Die Kontaktstifte 39a, b der Vorsteuer-Ventile 4, 5, 6 bilden eine Kontaktschnittstelle zum Aufsetzen der elektronischen Steuereinheit 3, so dass die elektronischen Steuereinheit 3 auf die Oberseite 32a der Vorsteuereinheit 32 aufgesteckt werden kann. Die elektronische Steuereinheit 3 kann somit vertikal als Leiterplatte oder ähnlicher Schaltungsträger aufgesteckt werden.

Die so ausgebildete elektropneumatische Vorsteuereinheit 32 wird dann nachfolgend in vertikaler Richtung, d. h. gemäß den Figuren in -Z-Richtung, vorzugsweise mit dazwischenliegender Relaisventil-Dichtung 56, auf die Relaisventile 7, 17 aufgesetzt. Somit ist eine schnelle Aussteuerung, mit einem geringen zu verstellenden Luftvolumen, weiterhin auch ein geringes zu entlüftendes Luftvolumen, erforderlich. Die in Fig. 1 eingezeichnete pneumatische Steuerleitung 30 wird somit lediglich durch kleine vertikale Bohrungen an den Anschlüssen 4b, 5a, 6b ausgebildet, bzw. die pneumatische Steuerleitung 30 bildet bereits auch den Vorsteuer-Raum 50 des Relaisventils 7.

Somit ist auch ein geringer Energieverbrauch erforderlich, da geringe Luftvolumina zur Ansteuerung zu verstellen und zu entlüften sind, sowie schnelle Betätigung der Ventile 4, 5 und 6 und somit ein geringer elektrischer Strombedarf.

Weiterhin können entsprechend auch weitere Drucksensoren, insbesondere zur Messung der Vorratsdrücke p0 und/oder der ausgesteuerten Drucke integriert werden, die auf der Leiterplatte der elektronischen Steuereinrichtung 3 platziert werden.

Die Relaisventil-Dichtung 56 kann als Formdichtung, d. h. Dichtungslayer, zur kompletten Abdichtung sämtlicher Kanäle eingesetzt werden. Gegenüber einer Ausbildung einzelner O-Ringe wird hierdurch die Montage einfacher und kostengünstiger.

Fig. 7 zeigt die Teilschritte a) bis d) der Montage bzw. der Herstellung der Vorsteuereinheit 32 bei einer der Darstellung dienenden Ausbildung. Hierbei wird in Teilschritt a) das Luftführungselement 60 mit seinen Schnapphaken 60a und 60b auf eine Montagevorrichtung 70 gesetzt.

Nachfolgend wird in Teilschritt b) die aus und den pneumatischen Vorsteuer-Ventilen 4, 5, 6 mit ihrem gemeinsamen Jochbügel 34 gebildete Montageeinheit von oben mit einer Montagekraft F auf das Luftführungselement 60 gesetzt. Die Schnapphaken 60a und 60b sind mit Einlaufschrägen 63 ausgebildet, an denen die Ventile 4, 5, 6 entlang gleiten, z. B. mit ihrem gemeinsamen Jochbügel 34. Hierbei biegen sich die Schnapphaken 60a und 60b elastisch nach außen auf, bis in Teilschritt c) die Schnapphaken 60a und 60b in den Freiraum zwischen die Schenkel 34a, 34b des Jochbügels 34 gelangen, so dass die Schnapphaken 60a und 60b bereits aufgrund der elastischen Wirkung ihrer Stege etwas zurückschnappen.

Weiterhin sind bei dieser der Darstellung dienenden Ausbildung die Schnapphaken 60a und 60b über elastische Verstellbereiche 64 an dem Gusskörper des Luftführungselementes 60 angebunden, wobei die Verstellbereiche 64 z. B. als Parallelogramm-Steg-Ausbildungen 64 oder andere Parallel- Führungseinrichtung ausgebildet sein können. Hierbei biegen sich die Verstellbereiche 64 gemäß dem Teilschritt c) elastisch derartig durch, dass die Schnapphaken 60a und 60b nach innen zu den Vorsteuerventilen 4, 5, 6 verstellt werden. Somit liegen die Schnapphaken 60a und 60b an dem Schenkel 34a des Jochbügels 34 an.

Beim nachfolgenden Nachlassen der vertikal nach unten wirkenden Montagekraft F wird der Jochbügel 34 mit einer Restkraft gegen die Schnapphaken 60a und 60b gedrückt. Diese Restkraft bzw. die mechanische Verspannung hält die so gebildete Vorsteuereinheit 32 während der nachfolgenden Montage zusammen, die über Schraubenlöcher 66 und die auch in Fig. 5 gezeigten Schrauben 62 erfolgt.

### Bezugszeichenliste (Teil der Anmeldung)

- 1: Zweikanaliger elektropneumatischer Achsmodulator
- 2: Bremssystem
- 3: elektronische Steuereinheit (ECU)
- 4, 5, 6; 14, 15, 16: elektropneumatische Vorsteuer-Ventile
- 4: erstes Einlassventil, getaktetes 2/2-Sperrventil
- 4a: Eingangsanschluss des Einlassventils 4
- 4b: Ausgangsanschluss des Einlassventils 4
- 5: Auslassventil, 2/2-Sperrventil
- 5a: Eingangsanschluss des Auslassventils 5, zum Relaisventil 7
- 5b: Ausgangsanschluss des Auslassventils 5, zur Entlüftung 31
- 4c: elektrischer Steuereingang des Einlassventils 4
- 5c: elektrischer Steuereingang des Auslassventils 5
- 6: Redundanzventil, 2/2-Sperrventil
- 6a: Eingangsanschluss des ersten Redundanzventils 6
- 6b: Ausgangsanschluss des ersten Redundanzventils 6
- 6c: elektrischer Steuereingang des ersten Redundanz-ventils 6
- 7: erstes Relaisventil
- 7a: Eingangsanschluss des ersten Relaisventils 7
- 8: erster Drucksensor
- 9: erster Bremskreis (Bremskanal)
- 10: erster Vorratsdruck-Anschluss
- 11: erste Bremsleitung (zu den Radbremsen)
- 14: zweites Einlassventil, getaktetes 2/2-Sperrventil
- 15: zweites Auslassventil
- 16: zweites Redundanzventil
- 17: zweites Relaisventil
- 18: zweiter Drucksensor
- 19: zweiter Bremskreis, Bremskanal
- 20: zweiter Vorratsspeicher-Anschluss
- 21: zweite Bremsleitung (zu der Radbremse)
- 22: analoge pneumatische Bremsdruck-Steuerleitung vom Bremsventil und Bremspedal
- p0: Vorratsdruck, Systemdruck
- p2: Steuerdruck EDS
- p1: Brems-Steuerdruck analog (von pneumatischer Brems-druck-Steuerleitung 22)

- 30: pneumatische Steuerleitung zwischen dem Relaisventil 7 und den Vorsteuer-Ventilen 4, 5, 6
- 32: elektropneumatische Vorsteuereinheit, Ansteuermodul
- 32a: Oberseite der Vorsteuereinheit 32
- 32b: Unterseite der Vorsteuereinheit 32
- 33: Rückkopplungsleitung
- 34: Jochbügel
- 34a: erster Schenkel des Jochbügels 34
- 34b: zweiter Schenkel des Jochbügels 34
- 34c: mittlerer Bügelbereich des Jochbügels 34
- 35, 36: Jochbuchsen
- 38: Spule
- 39a, b: Kontakte der Spule 40 Ventilinnenraum
- 42: Anker
- 43: Kern, Ventilrohr
- 43a: Durchgangsbohrung im Kern 43
- 44: Unterbrechungen oder Löcher in den Schenkeln 34a, b
- 45: Ventilsitz
- 47: Ankerfeder
- 48: Schlitze im Anker 42
- 49: Anschlag
- 50: Vorsteuer-Raum des Relaisventils 7, entspricht dem Eingangsanschluss 7a des Relaisventils 7
- 51: Steuerkolben oder Membran des Relaisventils 7
- 52: Außenumfang des Steuerkolbens 51
- 54: Ausnehmung in den Schenkeln 34a, 34b
- 55: Dichtung am Anker 42
- 56: Relaisventil-Dichtung
- 60: Luftführungselement, insbesondere Kunststoff-Spritzguss
- 60a, 60b, 60c, 60d: Schnapphaken, Einrasthaken
- 62: Schrauben
- 63: Einlaufschrägen der Schnapphaken 60a und 60b
- 64: elastische Verstellbereiche, z. B. Parallelogramm-Steg-Ausbildungen des Luftführungselementes 60
- 66: Schraubenlöcher
- A: Ventilachse
- B: Symmetrieachse des Relaisventils 7
- F: Montagekraft

- x: Axialrichtung der Ventile
- y: Querrichtung
- z: vertikale Richtung, Richtung der Symmetrieachse B

## Patentansprüche

1. Stellsystem (1), das als zweikanaliger elektropneumatischer Achsmodulator (1) für ein Bremssystem (2) eines Nutzfahrzeugs ausgebildet ist, wobei das Stellsystem (1) aufweist:
zwei fluidbetätigte Verbraucher (7), und
eine Vorsteuereinheit (32) zur Ansteuerung des fluidbetätigten Verbrauchers (7), wobei die Vorsteuereinheit (32) mindestens zwei elektromagnetische Vorsteuer-Ventile (4, 5, 6) pro Verbraucher (7) aufweist, die jeweils aufweisen:
- eine Spule (38) zur Ausbildung eines Magnetflusses entlang einer Ventilachse (A),
- einen in Axialrichtung (x) der Ventilachse (A) verstellbaren Anker (42),
- einen durch den Anker (42) verschließbaren und freigebbaren Ventilsitz (45),
- einen Fluid- Eingangsanschluss (4a, 5a, 6a) für ein Fluid und einen Fluid- Ausgangsanschluss (4b, 5b, 6b) für das Fluid,
wobei jeweils zumindest zwei der Vorsteuer-Ventile (4, 5, 6) pro Verbraucher (7) in einer zu ihrer Axialrichtung (x) senkrechten Querrichtung (y) nebeneinanderliegen mit jeweils parallelen Ventilachsen (A),
wobei die zumindest vier Vorsteuer-Ventile in Axialrichtung (x) ausgerichtet sind, und
die Vorsteuer-Ventile (4, 5, 6) jeweils einen Anschluss (4b, 5a, 6b) aufweisen, der zu einer gemeinsamen Unterseite (32b) zum Anschluss an einen Vorsteuer-Raum (50) des von den Vorsteuer-Ventilen (4, 5, 6) angesteuerten Verbrauchers (7) ragt,
wobei die Vorsteuereinheit (32) in einer zur Axialrichtung (x) der elektromagnetischen Vorsteuerventile (4, 5, 6, 14,15, 16) senkrechten vertikalen Richtung (z) auf einen den Fluid- Eingangsanschluss (7a) bildenden Vorsteuer-Raum (50) des Verbrauchers (7) aufgesetzt ist.

2. Stellsystem (1) nach Anspruch 1, **dadurch gekennzeichnet, dass** es eine gemeinsame analoge pneumatische Bremsdruck-Steuerleitung (22) aufweist.

3. Stellsystem (1) nach Anspruch 1 oder 2, **dadurch gekennzeichnet, dass** die Vorsteuer-Ventile (4, 5, 6) einen gemeinsamen Jochbügel (34) zum Schließen des Magnetflusses außerhalb ihrer Ventilachsen (A) aufweisen,
wobei der gemeinsame Jochbügel (34) zwei sich in einer zur Axialrichtung (x) senkrechten seitlichen Richtung (y) erstreckende Schenkel (34a, 34b) aufweist, und
wobei die Vorsteuer-Ventile (4, 5, 6) nebeneinanderliegend jeweils zwischen die beiden Schenkel (34a, 34b) gesetzt sind.

4. Stellsystem (1) nach Anspruch 3, **dadurch gekennzeichnet, dass** in den Schenkeln (34a, 34b) zwischen jeweils zwei benachbarten Vorsteuer-Ventilen (4, 5, 6) Materialschwächungen, z. B. Unterbrechungen (44) oder Löcher, zur Verringerung eines in Querrichtung zwischen verschiedenen Vorsteuer-Ventilen fließenden Magnetflusses ausgebildet sind.

5. Stellsystem (1) nach einem der vorherigen Ansprüche, **dadurch gekennzeichnet, dass** Kontaktstifte (39a, 39b) der Vorsteuer-Ventile (4, 5, 6) jeweils in der zur Axialrichtung (x) vertikalen Richtung (z) abstehen, zur aufsteckbaren Kontaktierung an einer aufgesetzten Steuereinheit (3).

6. Stellsystem (1) nach einem der vorherigen Ansprüche, **dadurch gekennzeichnet, dass** an die Vorsteuer-Ventile (4, 5, 6) in der Axialrichtung (x) ein gemeinsames Fluidführungselement (60) angeschlossen ist, insbesondere zur Ausbildung weiterer Anschlüsse (4a, 6a, 5b) der Vorsteuer-Ventile (4, 5, 6).

7. Stellsystem (1) nach Anspruch 6, **dadurch gekennzeichnet, dass** das Fluidführungselement (60) formschlüssig und/oder mit Einrastmitteln (60a, 60b) an den Ventilen befestigt ist) zur Ausbildung der einteiligen Vorsteuereinheit (32).

8. Stellsystem (1) nach Anspruch 7, **dadurch gekennzeichnet, dass** das Fluidführungselement (60) mit elastischen Verstellbereichen (64) und als Einrastmitteln dienenden elastisch verstellbaren Schnapphaken (60a, 60b) ausgebildet ist, die Einlaufflächen (34) zur selbsttätigen Verstellung an den Ventilen (4, 5, 6), z. B. dem gemeinsamen Jochbügel (34) der Ventile, bei der Montage aufweisen,
wobei die elastischen Verstellbereiche (64) zur Ausbildung einer die Ventile (4, 5, 6) über die Schnapphaken (60a, 60b) gegen das Fluidführungselement (60) drückenden Vorspannkraft ausgebildet sind.

9. Stellsystem (1) nach einem der Ansprüche 6 bis 8, **dadurch gekennzeichnet, dass** die Vorsteuereinheit (32) zweikanalig zur Ansteuerung eines zweikanaligen Achsmodulators (1) ausgebildet ist, wobei an das gemeinsame, mittlere Luftführungselement (60) in Axialrichtung (x) zu beiden Seiten hin jeweils für jeden Bremskreis (9, 13) mehrere Ventile (4,5,6; 14, 15, 16) mit einem gemeinsamen Jochbügel (34) angeschlossen sind.

10. Stellsystem (1) einem der vorherigen Ansprüche, **dadurch gekennzeichnet, dass** es als fluidbetätigte Verbraucher mindestens ein Relaisventil (7, 17), aufweist.

11. Stellsystem (1) einem Anspruch 10, **dadurch gekennzeichnet, dass** es zwei Relaisventile (7, 17) aufweist, deren Symmetrieachsen (B) senkrecht zu den Ventilachsen (A) stehen.

12. Stellsystem nach einem der vorherigen Ansprüche, **dadurch gekennzeichnet, dass** eine elektronische Steuereinheit (3) in vertikaler Richtung auf die Vorsteuereinheit (32) aufgesetzt ist.

13. Verfahren zum Herstellen eines Stellsystems (1) nach einem der vorherigen Ansprüche, mit mindestens folgenden Schritten:
Bereitstellen mindestens eines/des Jochbügels (34),
nebeneinander Positionieren der mehreren in jeweils einer Axialrichtung (X) ausgerichteten Spulen (38) und Einsetzen des Ankers (42), einer Feder (47) und eines Kerns (43) in jede Spule (38) zur Ausbildung der mehreren Vorsteuer-Ventile (4, 5, 6), wobei die Spulen (38) in einer zur Axialrichtung (x) senkrechten Querrichtung (y) nebeneinander positioniert werden,
Anschließen eines/des gemeinsamen Fluidführungselementes (60) an die mehreren Vorsteuer-Ventile (4, 5, 6) in der Axialrichtung (x) unter Verriegelung und/oder Einrastung,
Aufsetzen der Vorsteuereinheit (32) in der vertikalen Richtung (Z) auf den mindestens einen fluidbetätigten Verbraucher (7) und Befestigen,
wobei bei dem Schritt des Anschließens des gemeinsamen Fluidführungselementes (60) an die mehreren Vorsteuer-Ventile (4, 5, 6) nacheinander
- das Fluidführungselement (60) auf eine Montagevorrichtung (70) gesetzt wird, die eine elastische Verstellung des Fluidführungselementes (60) zulässt (Schritt a)),
- die Ventile (4, 5, 6) mit ihrem gemeinsamen Jochbügel (34) auf das Fluidführungselement (60) gesetzt werden (Schritt b)),
- die Ventile (4, 5, 6) mit einer Montagekraft (F) auf das Fluidführungselement (60) gedrückt werden, wodurch zumindest ein/der Verstellbereich (64) des Fluidführungselement (60) elastisch verstellt wird und die Einrastmittel (60a, 60b) des Fluidführungselementes (60) die Ventile (4, 5, 6) hintergreifen oder in diese hinein verstellt werden (Schritt c)),
- nach Entfernen der Montagekraft (F) zumindest der Verstellbereich (64) eine elastische Rückstellkraft ausbildet, die die Ventile (4, 5, 6) gegen die Einrastmittel (60a, 60b) drückt und die Vorsteuereinheit (32) zusammenhält (Schritt d)),
zur nachfolgenden Montage an dem Verbraucher (7).

## Claims

1. An actuator system (1) that is configured as a two-channel electropneumatic axle modulator (1) for a braking system (2) of a commercial vehicle, wherein the actuator system (1) has:
two fluid-actuated consumers (7) and
a pilot unit (32) for controlling the fluid-actuated consumer (7), wherein the pilot unit (32) has at least two electromagnetic pilot-valves (4, 5, 6) per consumer (7), each having:
- a coil (38) for producing a magnetic flux along a valve axis (A),
- an armature (42) which can be displaced in an axial direction (x) of the valve axis (A),
- a valve seat (45) that can be closed and released by the armature (42),
- a fluid inlet connection (4a, 5a, 6a) for a fluid and a fluid outlet connection (4b, 5b, 6b) for the fluid,
wherein in each case at least two of the pilot valves (4, 5, 6) per consumer (7) lie adjacent to one another with parallel valve axes (A) in a transverse direction (y) perpendicular to their axial direction (x),
wherein the at least four pilot valves are aligned in axial direction (x), and
the pilot valves (4, 5, 6) each have a connection (4b, 5a, 6b) jutting towards a common underside (32b) for connection to a pilot chamber (50) of the consumer (7) controlled by the pilot valves (4, 5, 6),
wherein the pilot unit (32) is placed on a pilot chamber (50) of the consumer (7) forming the fluid inlet connection (7a) in a perpendicular direction (z) vertical to the axial direction (x) of the electromagnetic pilot valves (4, 5, 6, 14, 15, 16).

2. The actuator system (1) according to claim 1, **characterized in that** it has a common analog pneumatic brake pressure control line (22).

3. The actuator system (1) according to claim 1 or 2, **characterized in that** the pilot valves (4, 5, 6) have a common yoke bracket (34) for closing the magnetic flux outside of their valve axes (A), wherein the common yoke bracket (34) has two legs (34a, 34b) extending in a perpendicular lateral direction (y) to the axial direction (x), and wherein the pilot valves (4, 5, 6) lying next to each other are each placed between the two legs (34a, 34b).

4. The actuator system (1) according to claim 3, **characterized in that** material weakening points, e.g., interruptions (44) or holes are respectively formed in the legs (34a, 34b) between two adjacent pilot valves (4, 5, 6) for the reduction of a magnetic flux flowing in transverse direction between different pilot valves.

5. The actuator system (1) according to any of the foregoing claims, **characterized in that** contact pins (39a, 39b) of the pilot valves (4, 5, 6) each protrude in a direction (z) vertical to the axial direction (x), for plug-in contact with a control unit (3) placed thereupon.

6. The actuator system (1) according to any of the foregoing claims, **characterized in that** a common fluid guidance element (60) is connected to the pilot valves (4, 5, 6) in the axial direction (x), in particular for forming further connections (4a, 6a, 5b) of the pilot valves (4, 5, 6) .

7. The actuator system (1) according to claim 6, **characterized in that** the fluid guidance element (60) is) fastened positively and/or with latching means (60a, 60b) to the valves for the formation of a one-piece pilot unit (32).

8. The actuator system (1) according to claim 7, **characterized in that** the fluid guidance element (60) is configured with elastic adjustment regions (64) and elastically adjustable snap hooks (60a, 60b) serving as latching means, which have inlet surfaces (34) for automatic adjustment to the valves (4, 5, 6), e.g., the common yoke bracket (34) of the valves, in the installation, wherein the elastic adjustment regions (64) are configured to form a biasing force pressing the valves (4, 5, 6) over the snap hooks (60a, 60b) against the fluid guidance element (60).

9. The actuator system (1) according to any of claims 6 to 8, **characterized in that** the pilot unit (32) is formed with two channels for controlling a dual-channel axle modulator (1), wherein a plurality of valves (4, 5, 6; 14, 15, 16) are connected with a common yoke bracket (34) to the common, middle air guidance element (60) in the axial direction (x) to both sides respectively for each brake circuit (9, 13).

10. The actuator system (1) any of the foregoing claims, **characterized in that** it has least one relay valve (7, 17) as a fluid-actuated consumer.

11. The actuator system (1) claim 10, **characterized in that** it has two relay valves (7, 17) the axes of symmetry (B) of which are perpendicular to the valve axes (A).

12. The actuator system according to any of the foregoing claims, **characterized in that** an electronic control unit (3) is placed on the pilot unit (32) in vertical direction.

13. A method for producing an actuator system (1) according to any of the foregoing claims, having at least the following steps:
providing at least one/the yoke bracket (34), positioning next to one another the coils (38) respectively aligned in an axial direction (X) and insertion of the armature (42), a spring (47) and a core (43) into each coil (38) to form the plurality of pilot valves (4, 5, 6), wherein the coils (38) are positioned next to one another in a transverse direction (y) perpendicular to the axial direction (x),
connecting a/the common fluid guidance element (60) to the plurality of pilot valves (4, 5, 6) in the axial direction (x) while locking and/or latching,
placement of the pilot unit (32) in the vertical direction (Z) on the at least one fluid-actuated consumer (7) and fastening,
wherein in the case of the step of connecting the common fluid guidance element (60) to the plurality of pilot valves (4, 5, 6) in turn
- the fluid guidance element (60) is placed on an installation device (70) which permits an elastic adjustment of the fluid guidance element (60) (Step a)),
- the valves (4, 5, 6) with their common yoke bracket (34) are placed on the fluid guide element (60) (Step b)),
- the valves (4, 5, 6) are pressed with an installation force (F) on the fluid guidance element (60), as a result of which at least one/the adjustment region (64) of the fluid guidance element (60) is elastically adjusted and the latching means (60a, 60b) of the fluid guidance element (60) engage the valves (4, 5, 6) or are adjusted to said valves (Step c)),
- after removal of the installation force (F) at least the adjustment region (64) forms an elastic restoring force, which presses the valves (4, 5, 6) against the latching means (60a, 60b) and holds the pilot unit (32) together (Step d)), for subsequent installation on the consumer (7).

## Revendications

1. Système de réglage (1), qui est réalisé sous la forme d'un modulateur d'essieu (1) électropneumatique à deux canaux pour un système de freinage (2) d'un véhicule utilitaire,
dans lequel le système de réglage (1) présente :
deux consommateurs (7) actionnés par un fluide, et
une unité de commande pilote (32) pour la commande du consommateur (7) actionné par un fluide, dans lequel l'unité de commande pilote (32) présente au moins deux soupapes de commande pilote (4, 5, 6) électromagnétiques par consommateur (7), qui présentent respectivement :
- une bobine (38) pour la réalisation d'un flux magnétique le long d'un axe de soupape (A),
- un induit (42) déplaçable dans la direction axiale (x) de l'axe de soupape (A),
- un siège de soupape (45) pouvant être fermé et libéré par l'induit (42),
- un raccord d'entrée de fluide (4a, 5a, 6a) pour un fluide et un raccord de sortie de fluide (4b, 5b, 6b) pour le fluide,
dans lequel respectivement au moins deux des soupapes de commande pilote (4, 5, 6) par consommateur (7) dans une direction transversale (y) perpendiculaire à leur direction axiale (x) se situent l'une à côté de l'autre avec des axes de soupape (A) respectivement parallèles,
dans lequel les au moins quatre soupapes de commande pilote sont orientées dans la direction axiale (x), et
les soupapes de commande pilote (4, 5, 6) présentent respectivement un raccord (4b, 5a, 6b), qui fait saillie vers une face inférieure (32b) commune pour le raccordement à une chambre de commande pilote (50) du consommateur (7) commandé par les soupapes de commande pilote (4, 5, 6),
dans lequel l'unité de commande pilote (32) est mise en place dans une direction verticale (z) perpendiculaire à la direction axiale (x) des soupapes de commande pilote (4, 5, 6, 14, 15, 16) électromagnétiques sur une chambre de commande pilote (50) du consommateur (7) formant le raccord d'entrée de fluide (7a).

2. Système de réglage (1) selon la revendication 1, **caractérisé en ce qu'**il présente une ligne de commande de pression de freinage pneumatique analogique (22) commune.

3. Système de réglage (1) selon la revendication 1 ou 2, **caractérisé en ce que** les soupapes de commande pilote (4, 5, 6) présentent un étrier de jonction (34) commun pour la fermeture du flux magnétique à l'extérieur de leurs axes de soupape (A),
dans lequel l'étrier de jonction (34) commun présente deux branches (34a, 34b) s'étendant dans une direction latérale (y) perpendiculaire à la direction axiale (x), et
dans lequel les soupapes de commande pilote (4, 5, 6) sont posées les unes à côté des autres respectivement entre les deux branches (34a, 34b).

4. Système de réglage (1) selon la revendication 3, **caractérisé en ce que** des affaiblissements de matériau, par exemple entailles (44) ou trous, sont réalisés dans les branches (34a, 34b) entre respectivement deux soupapes de commande pilote (4, 5, 6) voisines, pour la réduction d'un flux magnétique s'écoulant dans la direction transversale entre différentes soupapes de commande pilote.

5. Système de réglage (1) selon l'une quelconque des revendications précédentes, **caractérisé en ce que** des broches de contact (39a, 39b) des soupapes de commande pilote (4, 5, 6) font saillie respectivement dans la direction (z) verticale par rapport à la direction axiale (x), pour la mise en contact enfichable sur une unité de commande (3) mise en place.

6. Système de réglage (1) selon l'une quelconque des revendications précédentes, **caractérisé en ce qu'**un élément de guidage de fluide (60) commun est raccordé aux soupapes de commande pilote (4, 5, 6) dans la direction axiale (x), en particulier pour la réalisation d'autres raccordements (4a, 6a, 5b) des soupapes de commande pilote (4, 5, 6).

7. Système de réglage (1) selon la revendication 6, **caractérisé en ce que** l'élément de guidage de fluide (60) est) fixé par coopération de formes et/ou avec des moyens d'encliquetage (60a, 60b) sur les soupapes pour la réalisation de l'unité de commande pilote (32) d'une seule pièce.

8. Système de réglage (1) selon la revendication 7, **caractérisé en ce que** l'élément de guidage de fluide (60) est réalisé avec des zones de déplacement élastiques (64) et sous la forme de crochets à déclic (60a, 60b) déplaçables de manière élastique, servant de moyens d'encliquetage, qui présentent des surfaces d'entrée (34) pour le déplacement automatique sur les soupapes (4, 5, 6), par exemple l'étrier de jonction (34) commun des soupapes, lors du montage,
dans lequel les zones de déplacement élastiques (64) sont réalisées pour la réalisation d'une force de précontrainte pressant les soupapes (4, 5, 6) par l'intermédiaire des crochets à déclic (60a, 60b) contre l'élément de guidage de fluide (60).

9. Système de réglage (1) selon l'une quelconque des revendications 6 à 8, **caractérisé en ce que** l'unité de commande pilote (32) est réalisée avec deux canaux pour la commande d'un modulateur d'essieu (1) à deux canaux, dans lequel plusieurs soupapes (4, 5, 6 ; 14, 15, 16) avec un étrier de jonction (34) commun sont raccordées à l'élément de guidage d'air (60) central commun dans la direction axiale (x) vers les deux côtés respectivement pour chaque circuit de freinage (9, 13).

10. Système de réglage (1) l'une quelconque des revendications précédentes, **caractérisé en ce qu'**il présente comme consommateur actionné par un fluide au moins une soupape relais (7, 17).

11. Système de réglage (1) une revendication 10, **caractérisé en ce qu'**il présente deux soupapes relais (7, 17), dont les axes de symétrie (B) sont perpendiculaires aux axes de soupape (A).

12. Système de réglage selon l'une quelconque des revendications précédentes, **caractérisé en ce qu'**une unité de commande électronique (3) est mise en place sur l'unité de commande pilote (32) dans la direction verticale.

13. Procédé pour fabriquer un système de réglage (1) selon l'une quelconque des revendications précédentes, avec au moins les étapes suivantes :
la fourniture d'au moins un/l'étrier de jonction (34),
le positionnement les unes à côté des autres des plusieurs bobines (38) orientées dans respectivement une direction axiale (X) et l'insertion de l'induit (42), d'un ressort (47) et d'une partie centrale (43) dans chaque bobine (38) pour la réalisation des plusieurs soupapes de commande pilote (4, 5, 6), dans lequel les bobines (38) sont positionnées les unes à côté des autres dans une direction transversale (y) perpendiculaire à la direction axiale (x),
le raccordement d'un/de l'élément de guidage de fluide (60) commun aux plusieurs soupapes de commande pilote (4, 5, 6) dans la direction axiale (x) par verrouillage et/ou encliquetage,
la mise en place de l'unité de commande pilote (32) dans la direction verticale (Z) sur le au moins un consommateur (7) actionné par un fluide et la fixation,
dans lequel lors de l'étape du raccordement de l'élément de guidage de fluide (60) commun aux plusieurs soupapes de commande pilote (4, 5, 6) les unes après les autres
- l'élément de guidage de fluide (60) est posé sur un dispositif de montage (70), qui admet un déplacement élastique de l'élément de guidage de fluide (60) (étape a)),
- les soupapes (4, 5, 6) sont posées avec leur étrier de jonction (34) commun sur l'élément de guidage de fluide (60) (étape b)),
- les soupapes (4, 5, 6) sont pressées avec une force de montage (F) sur l'élément de guidage de fluide (60), ce qui a pour effet qu'au moins une/la zone de déplacement (64) de l'élément de guidage de fluide (60) est déplacée de manière élastique et les moyens d'encliquetage (60a, 60b) de l'élément de guidage de fluide (60) viennent se plaquer derrière les soupapes (4, 5, 6) ou sont déplacés à l'intérieur de celles-ci (étape c)).
- après le retrait de la force de montage (F) au moins la zone de déplacement (64) réalise une force de rappel élastique, qui presse les soupapes (4, 5, 6) contre les moyens d'encliquetage (60a, 60b) et maintient ensemble l'unité de commande pilote (32) (étape d)),
pour le montage subséquent sur le consommateur (7).
